# EUROPÄISCHE PATENTANMELDUNG

(11) **EP 1 586 792 A2**
(43) Veröffentlichungstag der Anmeldung: **19.10.2005**
(21) Anmeldenummer: 05004651.5
(22) Anmeldetag: 25.02.2005
(51) Int. Cl.: F16H 9/24

(54) **Stufenloses, formschlüssiges Getriebe**

(30) Priorität: 16.04.2004 DE 102004018466
(71) Anmelder: Walch, Martin, 75196 Remchingen (DE)
(72) Erfinder: Walch, Martin, 75196 Remchingen (DE)

(57) **Zusammenfassung**

Über die Antriebswelle wird eine Leistung in das Getriebe eingebracht. Über die Zahnwelle wird die Drehbewegung auf die Leistenkette übertragen. Auf der Leitenkette sind die einzelnen Leisten mit den Kettengliedern fest verbunden. Die Leisten haben Längsführungen in der sich die Kegelbolzen in Achsrichtung der Antriebswelle verschieben lassen. Die Kegelbolzen selbst sind nicht drehbar.
Die Kegelbolzen können sich als zweite Bewegungsfreiheit noch senkrecht in den bewegen. Ist der Kegelbolzen in dieser Bauweise in der oberen Stellung, ist das Zahnrad ausgedrückt, und das Zahnrad kann sich frei um den Kegelbolzen drehen. Ist der Kegelbolzen hier in der unteren Stellung kann sich das Zahnrad nicht mehr um den Kegelbolzen drehen und ist somit fest arretiert. Sind Zahnrad und Kegelbolzen fest miteinander verbunden ist diese Einheit nur noch in axialer Richtung der Antriebwelle in der Leiste verschiebbar.
Es ist jede andere Verbindung zwischen Zahnrad und Kegelbolzen möglich, bei der das Zahnrad in der einen Stellung frei drehbar ist, und in der anderen Stellung die Teile fest miteinander verbunden sind.

## Beschreibung

Das Übersetzungsverhältnis zwischen Leistenkette und Doppelzahnriemen (das Drehzahlverhältnis also) wird bestimmt von dem Winkel der Laufrichtung von Leistenkette zum Doppelzahnriemen.
Sind die Laufrichtungen parallel ist das Übersetzungsverhältnis 1:1. Ist Laufrichtung von Leistenkette und Doppelzahnriemen 90 Grad zueinander ist das Übersetzungsverhältnis 1:unendlich. Das Übersetzungsverhältnis von 1:unendlich ist aufgrund der Baugröße in Wirklichkeit nicht möglich, da ansonsten die Zahnräder und Kegelbolzen unendlich klein sein müssten, was technisch derzeit nicht realisierbar ist. Je kleiner jedoch die Zahnräder und zugehörigen/berührenden und angrenzenden Bauteile sind, umso größer kann das Übersetzungsverhältnis gewählt werden.
Somit ist 1:unendlich nur theoretisch und mathematisch möglich. Ein Übersetzungsverhältnis von 1:x ist durch die erforderliche Baugröße des Zahnrads, Kegelbolzens und des Doppelzahnriemens begrenzt. Über den Winkel Doppelzahnriemen zu Leistenkette ist die Drehzahl zu bestimmen, wobei hier über tan(alpha) die Drehzahl errechnet bzw. erreicht wird. Alpa ist der Winkel: Laufrichtung Leistenkette zu Laufrichtung Doppelzahnriemen.
Das Übersetzungsverhältnis ist somit ein Funktion f(x), wobei x=tan(alpha) ist

Da der Winkel der Laufrichtungen zwischen Leistenkette und Doppelzahnriemen jede beliebige Stellung einnehmen kann, ist eine stufenlose Übersetzung möglich.
Dreht man den Winkelblock um die Drehachse A ändert sich das Verhältnis "Weg der Linearkette zum Doppelzahnriemen" und somit auch das Drehzahlverhältnis.
Einzige Kraftschlüssige Verbindung ist zwischen Zahnrad und Kegelbolzen ist nur dazu da, das Zahnrad in jedem beliebigem Winkel zum Kegelbolzen arretieren zu können um die Stufenlosigkeit gewährleisten zu können. Bei der Kraft- und Drehzahlübertragung selbst ist dieser Kraftschluss nicht relevant.

Durch das wiederholte lösen und verbinden der Bauteile Zahnrad und Kegelbolzen, z.B. hier über einen Kegel, innerhalb eines Umlaufs der Leistenkette, kann das Zahnrad bei jedem Umlauf der Leistenkette in der erforderlichen Position zum Kegelbolzen neu arretiert werden, woraus sich die Stufenlosigkeit ergibt..
Für eine mechanische Stufenlosigkeit ist es erforderlich das sich das Zahnrad in jeder beliebigen Position drehen kann um sich mit dem Doppelzahnriemen auszurichten, um anschließend sofort mit dem Kegelbolzen fest verbunden zu werden um die formschlüssige Leistungs- und Drehzahlübertragung zu ermöglichen.

### Funktionsprinzip des Getriebes:

Über die Antriebswelle wird eine Leistung in das Getriebe eingebracht. Über die Zahnwelle wird die Drehbewegung auf die Leistenkette übertragen. Auf der Leitenkette sind die einzelnen Leisten mit den Kettengliedern fest verbunden. Die Leisten haben Längsführungen in der sich die Kegelbolzen in Achsrichtung der Antriebswelle verschieben lassen. Die Kegelbolzen selbst sind nicht drehbar.
Die Kegelbolzen können sich als zweite Bewegungsfreiheit noch senkrecht in den bewegen. Ist der Kegelbolzen in dieser Bauweise in der oberen Stellung, ist das Zahnrad ausgerückt, und das Zahnrad kann sich frei um den Kegelbolzen drehen. Ist der Kegelbolzen hier in der unteren Stellung kann sich das Zahnrad nicht mehr um den Kegelbolzen drehen und ist somit fest arretiert. Sind Zahnrad und Kegelbolzen fest miteinander verbunden ist diese Einheit nur noch in axialer Richtung der Antriebwelle in der Leiste verschiebbar.
Es ist jede andere Verbindung zwischen Zahnrad und Kegelbolzen möglich, bei der das Zahnrad in der einen Stellung frei drehbar ist, und in der anderen Stellung die Teile fest miteinander verbunden sind.

### Ablauf bei Betrieb:

Über die Zuftihrleiste und die Führungsleiste 2 werden bei Bewegung der Leistenkette die Zahnräder mit den Kegelbolzen zwangsgeführt, um Zahnrad/Kegelbolzen dann dem Winkelblock zuführen zu können.
Die Zuführleiste und Führungsleiste 2 dienen also dazu die Elemente Zahnrad und Kegelbolzen dem Winkelblock zuzuführen.
So bald die Kegelbolzen mit den Zahnrädern am oberen Ende des Winkelbocks angelangt sind, werden Kegelbolzen mit Zahnrad zwischen Führungsleiste 1 und Winkelblock eingeführt.
Im weiteren Verlauf richtet sich nun das Zahnrad beim eingreifen mit dem Doppelzahnriemen aus. Das Zahnrad kann zu diesem Zeitpunkt jede beliebige Winkelposition zum Kegelbolzen einnehmen.

Der Winkelblock hat in der Führungsbahn zwei Schrägen die den Kegelbolzen axial bewegen beim vorbeiführen. Werden die Kegelbolzen mit den Zahnrädern am Eingang an der Schräge entlang geführt, wird über die Schräge der Kegelbolzen nach unten gedrückt und der Kegelbolzen mit dem Zahnrad fest verbunden. Diese feste Verbindung zwischen Kegelbolzen und Zahnrad kann auch durch andere geeignete Methoden erfolgen.
Da hier nun der Kegelbolzen mit dem Zahnrad fest verbunden wird, und sich das Zahnrad bereits im Winkel so ausgerichtet hat, dass die Zähne des Zahnrades in den Doppelzahnriemen greifen, ist die formschlüssige Verbindung zwischen Doppelzahnriemen und Leistenkette zustande gekommen.

Der Ablauf ist also, dass erst das Zahnrad mit dem Doppelzahnriemen zueinander ausgerichtet wird, die Zähne ineinander greifen (Formschlüssig), und anschließend die Elemente Kegelbolzen und Zahnrad fest verbunden werden.

Da nun das Zahnrad über den Kegelbolzen über die Leiste mit der Leistenkette fest verbunden ist (außer dass die Kombination Kegelbolzen und Zahnrad sich in der Leiste entlang der Längsnut bewegen können), und die Leistenkette eine Vorwärtsbewegung ausführt, muss das System Zahnrad/Kegelbolzen aufgrund der Zwangsführung von Winkelblock und Führungsleiste eine seitwärts und Längsbewegung ausführen. (Außer der Winkelblock steht genau in 90 Grad zur Achse der Antriebswelle, dann gibt es keine Seitwärtsbewegung des Zahnrads/Kegelbolzen) Die Resultierende aus Seitwärts- und Längsbewegung ergibt die Bewegungsgeschwindigkeit und Richtung des Doppelzahnriemens an.
Der Doppelzahnriemen ist mit der Abtriebswelle verbunden und hier kann nun die Leistung abgenommen werden.
Je nach Winkelstellung zwischen Leistenkette (Achsrichtung der Antriebswelle) und Winkelblock ist das Drehzahlverhältnis unterschiedlich.
Nachdem das System Zahnrad/Kegelbolzen nahezu das Ende der Zwangsführung von Winkelblock und Führungsleiste 1 erreicht haben wird über die zweite Schräge die Verbindung Zahnrad und Kegelbolzen wieder gelöst. Nun ist das Zahnrad wieder frei drehbar um den Kegelbolzen.

Zahnrad mit Kegelbolzen verlassen anschließend das System Winkelblock und beginnen den Umlauf mit der Leistenkette um dann wider von der anderen Seite über die Führungsleisten 2 und der Zuführleiste dem Winkelblock zugeführt zu werden. Dort beginnt dann der Vorgang "Ablauf bei Betrieb" von neuem.

### Arbeitsweise im Gesamten:

Das Zahnrad, da es frei drehbar ist, kann sich mit dem Doppelzahnriemen ausrichten und ineinander greifen. Durch das entlangführen des Kegelbolzens zwischen Winkelblock und Führungsleiste 1 wird der Kegelbolzen durch eine am Anfang geeignete Weise bewegt, dass sich Kegelbolzen und Zahnrad fest, verdrehsicher miteinander verbinden.
Damit ist der Formschluß zwischen Zahnrad und Kegelbolzen erreicht. Somit gibt es in dem gesamten System keine kraftschlüssige Verbindung mehr für die Leistungsübertragung.

Durch die Zwangsführung von Führungsleiste 1 und Winkelblock wird das Zahnrad an dem Doppelzahnriemen entlang geführt. Dadurch wird die Drehbewegung/Kraft von der Leistenkette auf den Doppelzahnriemen übertragen.
Am Ende des Winkelblocks wird die Verbindung Kegelbolzen und Zahnrad wieder gelöst, und aus der Zwangsführung Führungsleistel/Winkelblock entlassen. Das Zahnrad ist dann um den Kegelbolzen wieder frei drehbar und kann sich somit nach einem Umlauf wieder neu mit dem Doppelzahnriemen ausrichten bevor es wieder mit dem Kegelbolzen fest verbunden wird.

### Ausführungsbeispiele

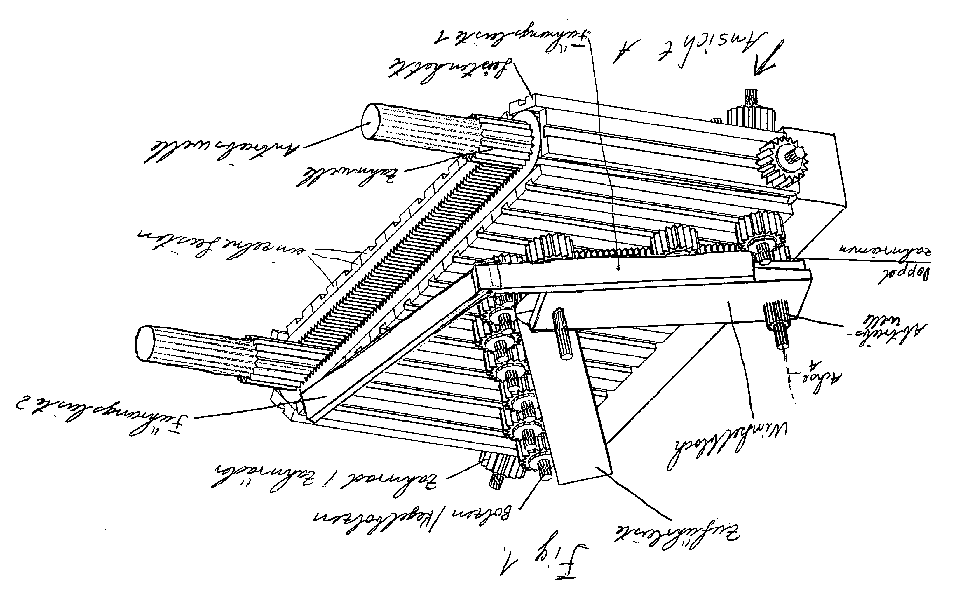

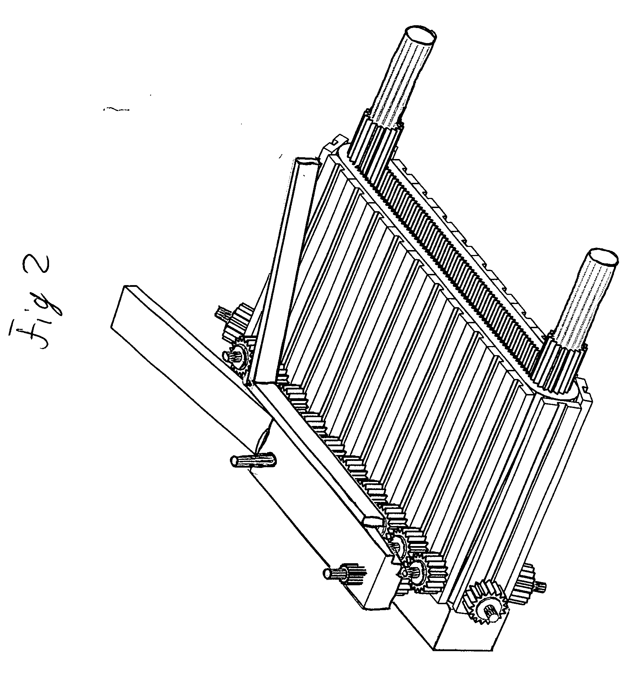

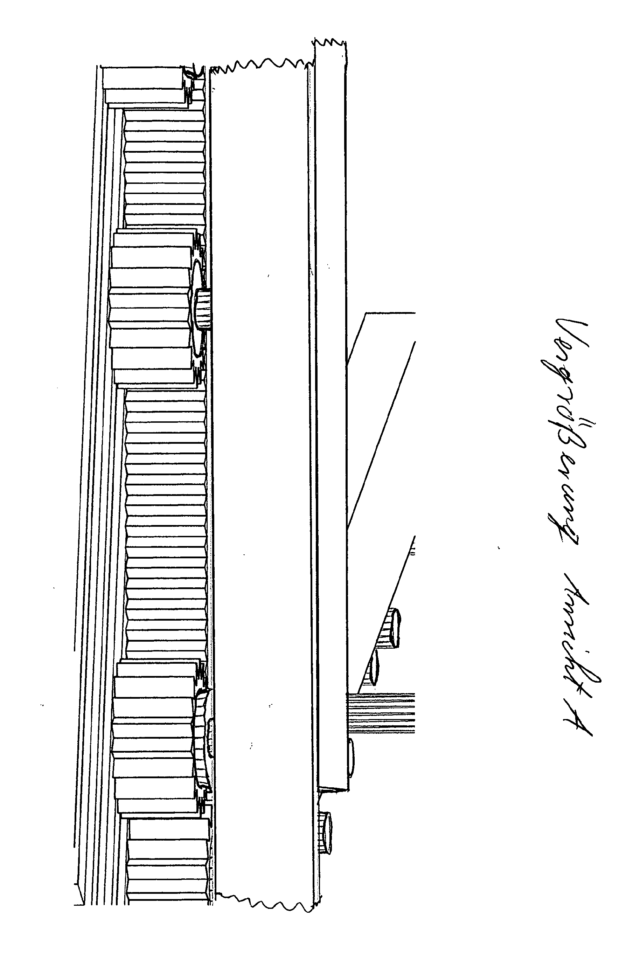

**FIG** 1
   Die Darstellung in Fig.1 ist eine Stellung bei der die Übersetzung von Leistenkette und Doppelzahnriemen 1:>1 ist. D.h. der Doppelzahnriemen hat eine größere Umfangsgeschwindigkeit als die Leistenkette.
**FIG 2**
   Hier ist das Übersetzungsverhältnis 1:1 D.h. der Doppelzahnriemen hat die gleiche Umfangsgeschwindigkeit wie die Leistenkette.
   Steht das Getriebe kann man den Winkelblock bei der hier gezeigten Bauart nicht verdrehen, und somit das Übersetzungsverhältnis ändern. Löst man die Verbindung Kegelbolzen und Zahnrad auch in dem Bereich wo sie am Winkelblock vorbei geführt werden (also Zahnrad und Kegelbolzen normaler Weise bei dieser Ausführung fest verbunden sind), ist es möglich den Winkelblock auch bei Stillstand des Getriebes zu verdrehen, und somit kann das Getriebe auch im Stillstand "geschaltet" werden.
   Bei einer solchen Ausführung/Erweiterung kann bei Stillstand das Übersetzungsverhältnis geändert werden ohne zusätzliche oder unerwünschte Reibungskräfte überwinden zu müssen. Bei einer Ausführung, wo die Verbindung Kegelbolzen/Zahnrad auch im Bereich des Winkelblocks gelöst werden kann, wo sie bei der Konstruktion fest ist, ist auch eine Leerlauf Schaltung möglich.
   Wird die Verbindung Kegelbolzen Zahnrad in diesem Bereich des Winkelblocks nicht gelöst ist es bei Stillstand nicht möglich An-und Abtriebswelle gegeneinander zu verdrehen. Kein Durchrutschen möglich, da die Verbindung Formschlüssig ist, wie bei einem Zahnradgetriebe.

## Patentansprüche

1. Stufenlose Getriebe arbeiten üblicher Weise so, dass sie Drehzahl und Drehmoment über Formschlüssige Verbindungen übertragen. Dieser Formschluss z.B. über Reibräder Hydraulische, Hydrodynamische, Elektrische oder Elektrostatische Bauelemente erzeugt, hat den Nachteil, dass zum einen bei der Leistungsübertragung nützliche Energie verloren geht, und zum anderen Reibung Verschleiß und/oder Schlupf erzeugt wird.
Auch sind die herkömmlichen stuflosen Getriebe aufwendig in Konstruktion und Herstellung.

2. Des Weiteren entsteht bei kraftschlüssigen Getrieben durch die Reibung zusätzlich Wärme die abgeführt werden muss, und reine Verlustleistung ist.
Ebenso kann bei bisher bekannten Reibradgetrieben nicht ausgeschlossen werden, dass bei Stillstand einer Getriebewelle sich gegen die andere verdrehen lässt. Das ist auf den Schlupf oder den Reibschluss der Getriebe zurückzuführen, da es keine genau definierte formschlüssige Verbindung gibt. Das Getriebe kann "durchrutschen".
Ebenfalls ist bei bekannten hydraulischen, hydrodynamischen stufenlosen Getrieben eine oft recht aufwendige Steuerung durch zusätzliche Ventile Schaufelräder o.ä. nötig, mit allen bekannten Nachteilen. Auch ist die Hydraulikflüssigkeit ein weiteres Element zur Kraftübertragung was die Kraft-Leistung nur undefiniert überträgt.
Bei den elektrisch Stufenlosen Getrieben wird die Drehzahländerung über die elektronische Steuerung, die Steuerspannung des Motors erreicht. Auch hier ist die Verlustleistung höher als bei einem rein mechanisch arbeitenden Getriebe. Auch haben diese stufenlosen Antriebseinheiten den großen Nachteil, dass sie im unteren Drehzahlbereich sehr wenig Drehmoment haben, was gerade bei Anlaufphasen o.ä. von großem Vorteil wäre.

3. Alle stufenlosen Getriebe bisher haben gemeinsam, dass die Kraftübertragung nicht über genau definierte mechanische Bauelemente erfolgt. D.h. es ist nicht genau zu bestimmen wo die Kraft übertragen wird. Dies hat auch zur Folge, dass das Drehzahlverhältniss nicht genau definiert werden kann. Auch sind Drehmoment und Leistungsübertragung von den Reibkräften abhängig.

4. Ob hydrodynamisch, elektrisch oder über Reibräder, diese stufenlosen Getriebe haben keinen genau definierten Kraftverlauf. D.h. es gibt Reibung, Schlupf oder sonst eine Art von Verlustleistung.
Die Reibung (flüssig mechanisch oder elektrisch) ist auch ausschlaggebend und für die Leistungsübertragung maßgebend. Sollen große Drehmomente übertragen werden müssen auch große Reibkräfte erzeugt werden (egal ob über mechanische, elektrische, oder hydrodynamische Größen).
Um nun die großen Reibkräfte zu erreichen sind recht aufwendige Konstruktionen nötig, und im Gegensatz zu herkömmlichen Zahnradgetrieben nicht sehr einfach zu bauen. Auch haben diese bisher stufenlosen Getriebe bei hohen Drehzahlen oft eine zunehmende innere "Eigenhemmung", z.B. bei Flüssigkeiten die Viskosität

5. Die Erfindung ist im Besonderen **dadurch gekennzeichnet, dass**
sie die bisher bekannten Nachteile der kraftschlüssigen Kraft- und Leistungsübertragung durch stufenlose Getriebe ausschließt, und die Kraft- und Leistung formschlüssig übertragen wird. Es ist ein definierter Kraftverlauf gegeben.

6. Die Erfindung ist im weiteren **dadurch gekennzeichnet, dass**
die Kraft- und Drehzahlübertragung von der Leistenkette zum Doppelzahnriemen, oder umgekehrt, stufenlos eingestellt werden kann, und die Kraft- Leistungsübertragung und Drehzahländerung über mechanisch geometrisch definierte Bauelemente erfolgt.

7. Der Patentanspruch ist im weiteren auch **dadurch gekennzeichnet dass**
bei jedem Umlauf die Zahnräder zu dem Doppelzahnriemen beim Eingreifen neu ausgerichtet werden. Durch dieses neu ausrichten der Zahnräder ist die Stufenlosigkeit realisierbar. Die Zahnräder können sich in jedem beliebigen Winkel ausrichten, bevor sie wieder mit dem Bolzen fest verbunden werden. Da nach dem Ausrichten Zahnrad und Bolzen fest verbunden werden ist die formschlüssige Verbindung gegeben wie bei Zahnrädern.

8. Die Erfindung ist weiterhin darin begründet, dass sich bei jeder Umdrehung ein frei bewegliches drehbares Bauteil (hier das frei drehbare Zahnrad) formschlüssig mit einem weiteren ausrichtet (hier der Doppelzahnriemen).
Nachdem sich die beiden Bauteile (hier Zahnrad und Doppelzahnriemen) formschlüssig in einer beliebigen Lage und Winkel ausgerichtet haben, wird das bewegliche, Element (hier Zahnrad) fixiert (mit dem Kegelbolzen) und somit kann die Leistung formschlüssig übertragen werden. Dadurch dass sich z.B. bei dieser Konstruktion das Zahnrad, sich in jeder beliebigen Winkellage zu dem Kegelbolzen ausrichten kann ist die Stufenlosigkeit möglich. Die eigentliche Leistungsübertragung erfolgt erst wenn sich Kegelbolzen und Zahnrad fest miteinander verbunden haben. Erst dann kann die Leistung von der Leistenkette über Kegelbolzen und Zahnrad auf den Doppelzahnriemen übertragen werden. Dadurch dass die Verbindung Kegelbolzen und Zahnrad beim verlassen der Winkelblock Einheit wieder gelöst wird, kann sich das Zahnrad mit dem Kegelbolzen nach einem Umlauf mit der Leistenkette wieder neu ausrichten am Anfang (Einlauf) des Winkelblocks. Dann wird es wieder fest mit dem Kegelbolzen verbunden und kann nun wieder die Leistung von Leistenkette auf Doppelzahnriemen übertragen.
Das Übersetzungsverhältnis wird bestimmt von der Winkellage des Winkelblocks bzw Doppelzahnriemens zu der Laufrichtung der Leistenkette.

9. Der ganze Vorgang kann auch umgekehrt erfolgen, und An- und Abtriebswelle können vertauscht werden.
